# EUROPEAN PATENT APPLICATION

(11) **EP 0 618 745 A1**
(43) Date of publication of application: **05.10.1994**
(21) Application number: 93302525.6
(22) Date of filing: 31.03.1993
(51) Int. Cl.: H04Q 7/04, H04B 7/26, H04M 1/72

(54) **Cordless telephone terminal and network**

(71) Applicant: BRITISH TELECOMMUNICATIONS public limited company, London EC1A 7AJ (GB)
(72) Inventor: Davis, John Richard, Flowton Ipswich Suffolk, IP8 4LD (GB)
(74) Representative: Buttrick, Richard

(57) **Abstract**

A cordless telephone handset comprises means for storing a handset identification code, means for storing a base station identification code, means for identifying the identification code of the base station on which the handset is currently operating, means for comparing the stored base station identification code with the current base station identification code, and reporting means for reporting the handset identification code and current base station identification code to the network, and means for replacing the base station identification code stored in the handset by the current base station identification code, so that the network can identify the location of the handset in relation to the network.

## Description

This invention relates to telephone terminals and networks. The invention is particularly suited to cordless telephone systems, in which cordless handsets communicate with base stations connected to a fixed telephone network. The cordless communication is by electro-magnetic radiation, usually radio frequency but sometimes other parts of the spectrum such as infra-red. However, the invention is also suitable for systems in which terminals are connected to a telephone network by, for instance, plug and socket connections.

In conventional cordless systems, although handsets may be used with any compatible base station, the identity of the handset is invisible to the network, and thus any calls made from the handset will be charged to the person responsible for the base station, and any calls made to the handset have to be made by dialling the directory number of the base station, unless a call diversion has been deliberately set up.

The invention allows mobility of handsets, in that it allows the owner of a handset to use it with any compatible base station to make and receive calls as if the handset were connected to the users own "home" base station. This implies that any charges incurred by use of the handset must be billed to the owner of the handset, not the owner of the base station, and that any calls intended for the owner of the handset must be directed to whichever base station it is connected to at the time.

According to one aspect of the invention, there is provided a cordless telephone handset comprising means for storing a handset identification code, means for storing a base station identification code, means for identifying the identification code of the base station on which the handset is currently operating, means for comparing the stored base station identification code with the current base station identification code and reporting means for reporting the handset identification code, and current base station identification code to the network, and means for replacing the base station identification code stored in the handset by the current base station identification code, so that the network can identify the location of the handset in relation to the network.

According to a second aspect of this invention, there is provided a telephone network for operation with one or more handsets according to any preceding claim, comprising a plurality of base stations for operating with the handsets, means for identifying to each handset an identification code associated with the base station with which it is operating and means for associating, for each handset, the hands et identification code and the base station identification code last reported to the system by that handset.

According to a third aspect of this invention, there is provided a telephone terminal for connection to a telephone network comprising means for storing a terminal identification code, means for storing a network termination node identification code, means for identifying the identification code of the termination node on which the terminal is currently operating, means for comparing the stored termination node identification code with the current termination node identification code, and reporting means for reporting the terminal identification code and current termination node identification code to the network, and means for replacing the termination node identification code stored in the terminal by the current termination node identification code.

When a conventional cordless terminal (CT) performs a Registration Update (described in more detail later) to a particular base station, it usually passes several pieces of information across the air interface to allow mutual identification and authentication of the base and CT. According to the invention additional network related information should be stored in additional memory on both sides of the air interface, preferably in the CT and the base station, interchanged across the air interface and also passed into the fixed public network.

Preferably, to reduce the number of messages circulating in the network, the handset reporting means is arranged to report to the network only if the stored and current base station identification codes do not correspond, indicating that a change has taken place.

Advantageously, the system can be used to arrange for diversion of calls intended for the owner of the handset to be directed to the last reported base station and also to arrange for billing of outgoing calls from a given handset to be arranged according to the handset identification code.

In order to cancel call diversions to the previous base station, it is preferable to arrange for the currently stored identification code of the previous base station as well as that of the new base station to be reported to the network by the handset.

The base station identification codes and handset identification codes may be the respective directory numbers to which each is allocated. Here, the directory number of the handset is the same as that of its 'home' base station, and is the recipient of any call charges.

The network may comprise means for selecting whether incoming calls are to be directed to the current base station or to a default station such as the handset owner's own private line, or a paging or answering service. Such an arrangement may be desirable if, for example, the handset is registered with a base station which is unable to receive incoming calls, as is the case with public Telepoint stations, or may occur temporarily at other stations as a result of a fault.

The reporting procedure may be initiated when the handset attempts an outgoing call. Alternatively, it may be initiated in response to a signal from a base station. This signal may be a periodic invitation to report. The network may be arranged so that if a handset fails to respond to such a signal, its calls are diverted to a default station.

Two or more base stations may share the same base station identification code for instance if they form part of a cordless private exchange. In such a case, should a handset move from the range of one base station to that of another having the same base station identification code no updating message will be sent to the network.

A system according to the invention will now be described. The exemplary embodiment describes a cordless system but it will be appreciated that the handsets may communicate with the base stations by plug and socket connections or any other suitable means.

The system comprises a number of cordless terminals which have access rights to several cordless base stations (BS) some of which have different network addresses. These might be organised as cordless PBX's, residential lines, etc. each with separate, standard, directory numbers (DN).

The CT has a first, permanent store for the directory number of its "home" BS, and a second store for storing the directory number of a BS. The CT can also receive BS directory numbers and can hold them in a third store. If the contents of the second and third stores are not the same, the CT will then signal the contents of all three stores to the network and will then overwrite the second store with the contents of the third. The second and third stores will then have identical contents until the CT moves to a new BS with a different directory number.

The BS is capable of identifying to the CT the DN it is connected to. It may acquire this information from the network by means of an upstream signal request over the two-wire PSTN when it is powered up. The network will reply with the number by means of a downstream message. Alternatively, the information may be stored elsewhere in the network, and only signalled to the base station in response to a registration attempt between the BS and a CT.

The signalling between the network and the base station may be by any means suitable for use over the PSTN, for example Frequency Shift Keying.

When the CT performs a Registration Update, it requests the DN from the BS over the air interface. The BS replies with its DN. The CT compares this received "current" DN with the previous DN which it has stored. If it has changed, it sends the previous DN to the BS which is instructed to pass the information into the controlling means IN within the network (via a suitable upstream message). The IN then cancels any diversion to the previous DN and sets up a diversion to the current base station DN. The handset will also have stored the DN of its "home" BS, which will be the point to which billing is directed. This number will also be sent to the IN platform via the air interface, and the BS. It could then be used for the billing of the second leg of any incoming calls diverted from the home DN, and, optionally, for the outgoing call from the "visited" BS/DN.

Note that the above sequence is not the same as the standard "handover" technique commonly used in cellular radio or advanced cordless telephone systems. In those systems, there is no concept of a physical network address, only the current location of the handset. In the system proposed here, the intelligence as to whether the information in the network database needs updating resides in the handset (CT), rather than in the base station or the network itself. Finally, handover of the CT between BS's connected to the same DN (eg as part of a multi-cell W-PBX) remains wholly under the control of the cordless system and is invisible to the fixed network.

Registration Updating, whereby a CT informs the BS that it is within range and able to accept incoming calls, can be achieved in several ways. The details of these will depend on the cordless telecommunications standard on which the system is based. Typical examples of the standards which could be used are CT2/CAI and DECT. The most basic Registration Update will occur when the CT attempts to make an outgoing call. More sophisticated systems could allow for registration updating to occur without setting up a call, thus preparing the system to receive an incoming call to the CT's home DN or a pre-existing diversion (i.e. an automatic "follow-me"). Registration updating could also be instigated manually, by the user pressing a key on the CT, or automatically for cordless systems where the CT can listen for a beacon signal from the BS. Typical systems with beacon channels include DECT, CT2Plus and CT2/CAI Release 2.

Furthermore, the currently allowed "silent polling" in CT2/CAI could be extended to allow the BS to search at predetermined intervals for all the CTs within range and then to signal the network with any changed information. This signalling would be in the form of a series of follow-me diversions. The silent polling method would also allow automatic deregistration of CTs which had moved out of range but had not yet re-registered elsewhere. Even if registration is not dependant on call-initiation, there are a number of other reasons why deregistration is necessary, such as a fault in the handset, the handset being out of range of any base station, or having moved and registered on a base station not equipped to identify its DN to the CT. In this case, the polling BS would request the IN to cancel any diversions set up so that all incoming calls were delivered to the home BS, or to an answering or paging service.

Additional signalling interchanges could advantageously occur between the CT and the network, using the methods described above, to ensure that the correct authority exists for the setting up of diversions and billing charges etc. This authentication would be additional to that already used as a part of the cordless standards to allow the establishment of a radio link between the BS and the CT, and the processing of a call to/from the CT on the BS's DN. The authority for changes to the IN database could be on the basis of the correct handset ID - already exchanged for link set-up - for the particular home DN, or via a PIN of some sort.

## Claims

1. A cordless telephone handset comprising means for storing a handset identification code, means for storing a base station identification code, means for identifying the identification code of the base station on which the handset is currently operating, means for comparing the stored base station identification code with the current base station identification code and reporting means for reporting the handset identification code, and current base station identification code to the network, and means for replacing the base station identification code stored in the handset by the current base station identification code, so that the network can identify the location of the handset in relation to the network.

2. A telephone handset according to claim 1 arranged such that reporting takes place only if the stored and current base station identification codes are different.

3. A telephone handset according to claim 1 or 2 wherein the previously stored base station identification code is also reported to the network.

4. A telephone handset according to any of claims 1 to 3 wherein the base station identification code is a directory number.

5. A telephone handset according to any preceding claim wherein the handset identification code is a directory number.

6. A telephone handset according to any preceding claim wherein reporting is initiated on attempting an outgoing call.

7. A telephone handset according to any one of claims 1 to 5 wherein reporting is initiated in response to a signal from a base station.

8. A telephone terminal for connection to a telephone network comprising means for storing a terminal identification code, means for storing a network termination node identification code, means for identifying the identification code of the termination node on which the terminal is currently operating, means for comparing the stored termination node identification code with the current termination node identification code, and reporting means for reporting the terminal identification code and current termination node identification code to the network, and means for replacing the termination node identification code stored in the terminal by the current termination node identification code.

9. A telephone network for operation with one or more handsets according to any any of claims 1 to 7, comprising a plurality of base stations for operating with the handsets, means for identifying to each handset an identification code associated with the base station with which it is operating and means for storing, for each handset, the handset identification code and base station identification code last reported to the system by that handset.

10. A telephone network according to claim 9 wherein the base station identification codes are directory numbers.

11. A telephone network according to claim 9 or 10 wherein the handset identification code is a directory number.

12. A network as claimed in any of claims 9 to 11 further comprising means for routing calls directed to a handset to the base station last reported as connected to that handset.

13. A network as claimed in any of claims 9 to 12 further comprising means for raising invoices for calls made according to the handset identification code.

14. A network as claimed in either claim 12 or 13 comprising means for selecting whether calls are directed to the current base station or to a default station.

15. A network as claimed in claim 14 wherein the selection is determined by the system wherein calls are diverted to a default station if the current base station is unable to receive incoming calls.

16. A network as claimed in any of claims 9 to 15 wherein more than one base station have the same base station identification code.

17. A network as claimed in any of claims 9 to 16 wherein the base stations periodically transmit a signal to invite any handsets in range to report.

18. A network as claimed in claim 17 wherein incoming calls directed to any handset currently registered with a first base station which fails to report when that first base station transmits a signal inviting it to report are diverted to a default station.

19. A network as claimed in claim 14, 15 or 18 wherein the default station is an answering or paging service.

20. A network as claimed in any of claims 9-19, wherein each base station has means for storing an identity code and means for transmitting the code to a handset.

21. A network as claimed in any of claims 9 to 19, wherein each base station comprises means for interrogating the network for the identification code of the line to which it is connected, and means for transmitting the identification code to the handset associated with the base station.
